# EUROPEAN PATENT APPLICATION

(11) **EP 1 188 901 A2**
(43) Date of publication of application: **20.03.2002**
(21) Application number: 01304216.3
(22) Date of filing: 11.05.2001
(51) Int. Cl.: F01D 5/08

(54) **Bypass holes for rotor cooling**

(30) Priority: 15.09.2000 US 662780
(71) Applicant: GENERAL ELECTRIC COMPANY, Schenectady, NY 12345 (US)
(72) Inventor: Leone, Sal Albert, Scotia, New York 12302 (US); Eldrid, Sacheverel Quentin, Saratoga Springs, New York 12866 (US); Lupe, Douglas Arthur, Ballston Lake, New York 12019 (US)
(74) Representative: Pedder, James Cuthbert

(57) **Abstract**

In a multi-stage turbine wherein at least one turbine wheel (12) supports a row of buckets (14) for rotation, and wherein the turbine wheel (12) is located axially between first and second annular fixed arrays of nozzles (36, 38), a cooling air circuit for purging a wheelspace between the turbine wheel (12) and the second fixed annular array of nozzles (38) comprising a flowpath through a shank portion (50) of one or more buckets (14) connecting a wheel space between the turbine wheel (12) and the first fixed annular array of nozzles (36) with the wheel space between the turbine wheel (12) and the second fixed annular array of nozzles (38).

## Description

This invention relates to cooling circuits for turbomachinery and, specifically to a cooling circuit that delivers cooling air to the stage 4 nozzle wheelspaces of a gas turbine.

Multi-stage turbines typically comprise axially spaced, rotatable wheels fixed to the turbine rotor, with buckets or blades mounted about the wheel hubs for rotation with the rotor. These wheels are axially separated on the rotor by spacer wheels that are radially aligned with fixed, annular arrays of stationary nozzles. Each row of buckets or blades forms a turbine "stage" such that, for a 4 stage turbine for example, stage 1 is closest to the turbine combustor, and stage 4 is farthest from the combustor.

Certain advanced multi-stage gas turbines are air cooled, steam cooled, or air and steam cooled. In one example, stages 1 and 2 are steam cooled; stage 3 is air cooled; and stage 4 is left un-cooled. In this arrangement, it is necessary to purge the stage 4 nozzle wheelspaces, i.e., the spaces located on opposite sides of the stage 4 nozzles, in areas radially inward of the nozzle blades. These stage 4 nozzle wheelspaces are thus also known as the stage 3 aft wheelspace (3AWS) and the stage 4 forward wheelspace (4FWS).

Adequate cooling or purging of the stage 4 nozzle wheelspaces requires air from a higher pressure source to insure adequate outflow of the purge air, thus preventing ingestion of hot combustion gases into the wheelspaces. High wheelspace temperatures can reduce the life of the turbine wheels and spacers, and thus measures need be taken to avoid ingestion of the hot combustion gases into these areas.

The specific problem to be solved is the delivery of cooling or purge air to the stage 4 nozzle wheelspaces with minimum cycle performance penalty. Typically, air is delivered through the nozzle to exit into the nozzle forward wheelspace. Some of this air flows through the interstage seal to purge the nozzle aft wheelspace. An alternate solution for this arrangement might be to bleed some of the rotor air into these wheelspaces. However, the air used by the turbine rotor is taken from a higher compressor stage than necessary to purge the wheelspaces, and this will result in a substantial performance penalty.

The stage 3 bucket, due to the complexities of advanced machine rotor steam delivery systems, is cooled using compressor mid stage extraction air delivered through the stage 3 nozzle. Due to the nature of this delivery system, the stage 3 forward wheelspace (3FWS) has excess flow. It is also at a higher pressure than the stage 3AWS due to the nature of a gas turbine flowpath. It would thus be desirable to use the additional flow and pressure available in the upstream, or stage 3FWS, to purge or cool the stage 4 nozzle wheelspaces (the 3AWS and the 4FWS).

This invention reduces the total amount of secondary flow required to purge the turbine rotor wheelspaces and cool the turbine buckets, thus improving gas turbine efficiency. This is done by using seal leakage air from the stage 3FWS and guiding it via the stage 3 bucket to cool and purge the stage 3AWS and stage 4FWS. This system has the additional benefit of allowing a simplified stage 4 nozzle and surrounding stator design, since no air need be passed through the nozzle to purge the adjacent stage 4 wheelspaces.

In the exemplary embodiment, this invention adds holes through the stage 3 bucket forward and aft coverplates (skirts) to allow a metered amount of air to flow through the bucket shank to the bucket aft wheelspace (3AWS) and thereby provide 3AWS wheelspace cooling. This air then flows through the stage 4 nozzle interstage seal and purges the 4FWS. The bypass holes in the bucket shank allow for an accurate and controllable airflow from the 3FWS into the 3AWS. It will be appreciated that the number of stage 3 buckets provided with bypass holes will depend on the cooling requirements.

In its broader aspects, therefore, the present invention relates to a multi-stage turbine wherein at least one turbine wheel supports a row of buckets for rotation, and wherein the turbine wheel is located axially between first and second annular fixed arrays of nozzles, and including a cooling air circuit for purging a wheelspace between the turbine wheel and the second fixed annular array of nozzles comprising a flowpath through a shank portion of one or more buckets connecting a wheelspace between the turbine wheel and the first fixed annular array of nozzles with the wheelspace between the turbine wheel and the second fixed annular array of nozzles.

In another aspect, the invention relates to a method of purging forward and aft wheelspaces on opposite sides of an array of nozzles fixed on a diaphragm located axially between forward and aft turbine wheels mounted in a turbine rotor, wherein said fixed array of nozzles are supported in a diaphragm that is provided with first seal segments, in radial alignment with a spacer wheel between the forward and aft turbine wheels, comprising:
a) supplying air under pressure to a wheelspace forward of the forward turbine wheel;
b) bleeding part of the air under pressure through said forward turbine wheel to the forward wheelspace on one side of the fixed array of nozzles; and
c) permitting air in the forward wheelspace to pass between the diaphragm and the turbine rotor into the aft wheelspace.

The invention will now be described in greater detail, by way of example, with reference to the drawings, in which:-
FIGURE 1 is a partial section through a gas turbine rotor assembly, incorporating a wheelspace cooling arrangement in accordance with an exemplary embodiment of the invention; and
FIGURE 2 is a partial perspective view of a bucket shank in accordance with the exemplary embodiment of the invention.

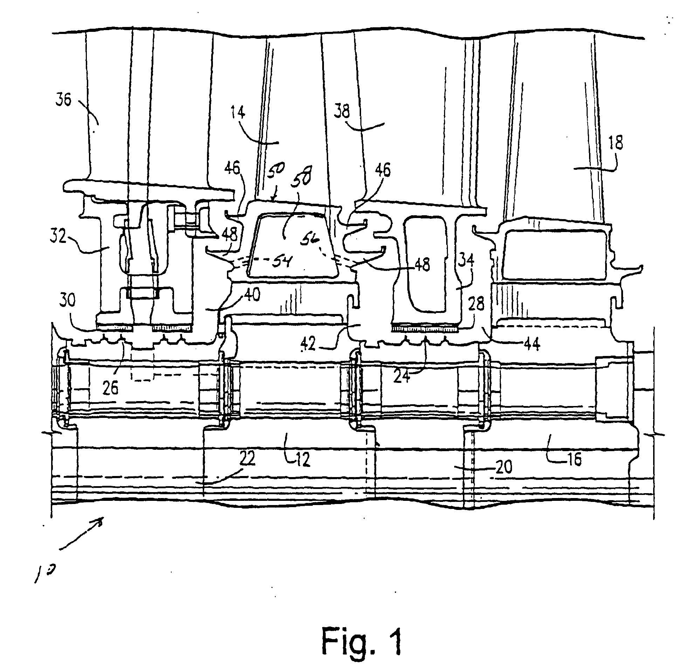

With reference to Figure 1, part of a turbine rotor assembly 10 is shown to include a stage 3 turbine wheel 12 mounting a row of buckets 14 and a stage 4 turbine wheel 16 mounting another row of buckets 18. The turbine wheels 12 and 16 are separated by a spacer wheel 20, and a similar spacer wheel 22 is shown forward of the stage 3 turbine wheel, separating the stage 3 wheel 12 from a stage 2 wheel (not shown).

The spacer wheels 20 and 22 are formed with seal components 24, 26, respectively, that cooperate with seal components 28, 30 supported respectively, on the stage 3 and 4 diaphragms 32, 34. The diaphragms also support the stage 3 nozzles 36 and stage 4 nozzles 38 on opposite sides of the stage 3 buckets 14. The stage 3 forward wheelspace (or 3FWS) 40 is located between the diaphragm 32 and the stage 3 wheel 12 with its row of buckets 14, while the stage 3 aft wheelspace (or 3AWS) 42 is located between the stage 3 wheel 12 with its row of buckets 14 and the stage 4 diaphragm 34. The stage 4 forward wheelspace (or 4FWS) 44 is located between the stage 4 diaphragm 34 and the stage 4 wheel 16 and its row of buckets 18. Note that the 3AWS and the 4FWS comprise the stage 4 wheelspaces.

It is the stage 3 turbine wheel 12 and its row of buckets 14 that are of particular interest in this invention. Note that each bucket has a pair of "angel wings" 46, 48 on forward and aft sides, respectively, of the bucket or airfoil 14. These angel wings are located at a radially inner end of the buckets and serve to create at least a partial seal between the wheelspaces and the hot gas path between the buckets and nozzles.

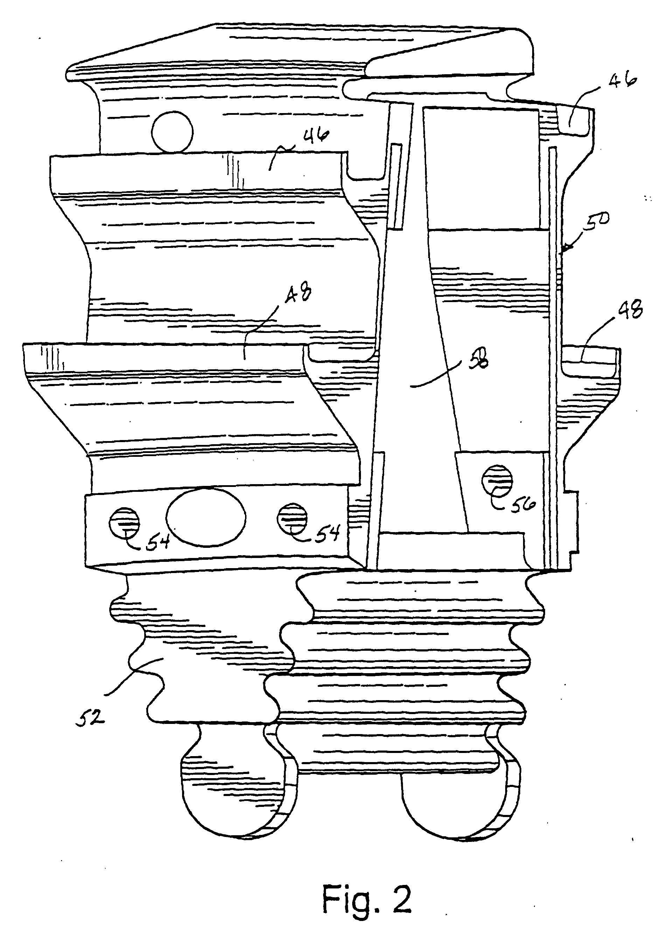

As mentioned above, there is excess air flow in wheelspace 40 (or 3FWS), and that excess flow is used here to supply purge air to the wheelspace 42 and with reference also to Figure 2. Specifically, each bucket 14 in the stage 3 turbine wheel 12 has a shank portion 50 between the pairs of "angel wings," just above (or radially outward of) the dovetail 52 by which the bucket is secured to the wheel. Bypass holes 54, 56 are formed in the shank portion 50, radially between the dovetail and the angel wings 46, 48 of one or more of the buckets (the number of buckets to be determined by cooling requirements). Holes 54 thus allow air in wheelspace 40 to flow into the hollow chamber 58 of shank portion 50, while holes 56 supply air from the chamber 58 to the wheelspace 42. Accordingly, excess 3FWS air in wheelspace 40 is bled to the 3AWS 42, (one of the stage 4 nozzle wheelspaces) in wheelspace 40, and subsequently travels by leakage along and through the seal elements 24, 28 to the 4FWS or stage 4 wheelspace 44.

## Claims

1. A multi-stage turbine comprising at least one turbine wheel supporting a row of buckets for rotation, said turbine wheel being located axially between first and second annular fixed arrays of nozzles and a cooling air circuit, for purging a wheelspace between said turbine wheel and said second fixed annular array of nozzles, comprising a flowpath through a shank portion of one or more buckets connecting a wheelspace between said turbine wheel and said first fixed annular array of nozzles with said wheelspace between said turbine wheel and said second fixed annular array of nozzles.

2. The multi-stage turbine of claim 1 wherein said shank portion of said one or more buckets includes a forward wall and an aft wall that define, in part, a hollow chamber in said shank portion, said flow path defined by at least one hole in said forward wall, said hollow chamber, and at least one hole in said aft wall.

3. The multi-stage turbine of claim 1 comprising four stages, and wherein said at least one turbine wheel comprises a stage 3 turbine wheel.

4. The multi-stage turbine of claim 2 or 3 wherein said flowpath comprises a pair of holes in said forward wall and a pair of holes in said aft wall.

5. A multi-stage turbine comprising at least one turbine wheel supporting a row of buckets for rotation, said turbine wheel being located axially between first and second annular fixed arrays of nozzles, and means for supplying purge air through one or more of the buckets to a wheelspace aft of the turbine wheel in a direction of turbine flow.

6. A multi-stage turbine comprising at least one turbine wheel supports a row of buckets for rotation, said turbine wheel being located axially between first and second annular fixed arrays of nozzles, and a cooling circuit comprising at least one cooling passage through a shank portion of at least one of said buckets.

7. A method of purging forward and aft wheelspaces on opposite sides of an array of nozzles fixed on a diaphragm located axially between forward and aft turbine wheels mounted in a turbine rotor, wherein said fixed array of nozzles are supported in a diaphragm that is provided with first seal segments, in radial alignment with a spacer wheel between said forward and aft turbine wheels, comprising:
a) supplying air under pressure to a wheelspace forward of said forward turbine wheel;
b) bleeding part of said air under pressure through said forward turbine wheel to the forward wheelspace on one side of said fixed array of nozzles; and
c) permitting air in said forward wheelspace to pass between said diaphragm and said turbine rotor into said aft wheelspace.
